# EUROPÄISCHE PATENTSCHRIFT

(11) **EP 1 954 700 B1**
(45) Veröffentlichungstag und Bekanntmachung des Hinweises auf die Patenterteilung: **05.09.2012**
(21) Anmeldenummer: 06829986.6
(22) Anmeldetag: 14.11.2006
(51) Int. Cl.: C07F 7/00, C08G 77/388

(54) **VERFAHREN ZUR HERSTELLUNG VON BETA-KETOCARBONYL-FUNKTIONELLEN ORGANOSILICIUMVERBINDUNGEN**
METHOD FOR PREPARING BETA-KETOCARBONYL-FUNCTIONAL ORGANO-SILICIUM COMPOUNDS
PROCEDE POUR PREPARER DES COMPOSES D'ORGANO-SILICIUM A FONCTION BETA-CETOCARBONYLE

(30) Priorität: 24.11.2005 DE 102005056051
(43) Veröffentlichungstag der Anmeldung: 13.08.2008
(73) Patentinhaber: Wacker Chemie AG, 81737 München (DE)
(72) Erfinder: HERZIG, Christian, 83329 Waging (DE); JOACHIMBAUER, Martina, 84533 Haiming (DE)
(74) Vertreter: Deffner-Lehner, Maria
(86) Internationale Anmeldenummer: PCT/EP2006/068421
(87) Internationale Veröffentlichungsnummer: WO 2007/060113

(56) Entgegenhaltungen:
- US-A- 6 121 404

## Beschreibung

Die Erfindung betrifft ein Verfahren zur Herstellung von β-Ketocarbonyl-funktionellen Organosiliciumverbindungen.

In US 4,861,839 werden Alkoxysilane beschrieben, die mit Acetessig(thio)ester- oder Acetessigamidogruppen substituiert sind und als monomere Chelatliganden für Metallkatalysatoren verwendet werden.

Polymere ß-Ketoestersiloxane sind aus US 4,808,649 bekannt, ebenso ein Verfahren zu deren Herstellung sowie deren Verwendung als Stabilisator für Polyvinylchlorid.

Funktionelle Polysiloxane, die Acetoacetatgruppen enthalten werden in US 5,952,443 beschrieben, wobei ein Teil der funktionellen Gruppen mindestens zwei ß-Ketocarbonylgruppen pro funktioneller Gruppe enthalten muss und die Anzahl der Dimethylsiloxyeinheiten nicht höher als 50 ist. Weithin ist die Vernetzung mit Polyaminen in Lackformulierungen beschrieben.

Die Modifizierung von Carbinol- oder Aminopolysiloxanen mit Diketen und dessen Derivaten wird in US 6,121,404 beschrieben. Die Produkte werden in wässriger Lösung zusammen mit Aminopolysiloxanen zur Herstellung von Elastomerfilmen verwendet.

Es bestand die Aufgabe ein Verfahren zur Herstellung von β-Ketocarbonyl-funktionellen Organosiliciumverbindungen bereitzustellen, bei dem unvergelte Produkte erhalten werden. Die Aufgabe wird durch die Erfindung gelöst.

Gegenstand der Erfindung ist ein Verfahren zur Herstellung von β-Ketocarbonyl-funktionellen Organosiliciumverbindungen, bei dem Diketene (1) der allgemeinen Formel 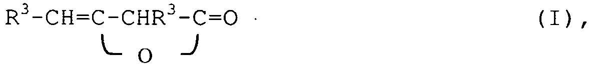 wobei
- R³: ein Wasserstoffatom oder einen Kohlenwasserstoffrest mit 1 bis 18 Kohlenstoffatomen, vorzugsweise ein Wasserstoffatom, bedeutet,
mit Organosiliciumverbindungen (2), die mindestens einen Si-gebundenen Rest A der allgemeinen Formel

-R¹-NR²₂ (II)

je Molekül enthalten, wobei
- R¹: einen zweiwertigen organischen Rest mit 2 bis 10 Kohlenstoffatomen, der Heteroatome ausgewählt aus der Gruppe von Sauerstoff, Schwefel und Stickstoff enthalten kann, vorzugsweise einen Kohlenwasserstoffrest mit 2 bis 10 Kohlenstoffatomen, bevorzugt 2 bis 4 Kohlenstoffatomen, bedeutet,
- R²: ein Wasserstoffatom oder einen organischen Rest mit 1 bis 100 Kohlenstoffatomen, der Stickstoffatome enthalten kann, vorzugsweise ein Wasserstoffatom oder einen Alkyl-; Cycloalkyl- oder Aminoalkylrest mit 1 bis 30 Kohlenstoffatomen, bedeutet,
mit der Maßgabe, dass der Rest der Formel (II) mindestens eine primäre und gegebenenfalls mindestens eine sekundäre Aminogruppe, vorzugsweise mindestens eine primäre Aminogruppe, aufweist,

in Gegenwart von organischen Verbindungen (3), die die Reaktion von primären oder sekundären Aminogruppen mit ß-Ketocarbonylverbindungen verzögern oder verhindern,
umgesetzt werden.

Bevorzugt wird Diketen der Formel 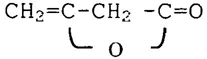 eingesetzt.

Als Organosiliciumverbindungen (2) können Silane oder oligomere oder polymere Organopolysiloxane eingesetzt werden. Die Organosiliciumverbindungen (2) enthalten vorzugsweise 1 bis 20 000 Si-Atome, bevorzugt 2 bis 5 000 Si-Atome und besonders bevorzugt 60 bis 3000 Si-Atome. Die Organosiliciumverbindungen (2) können linear, verzweigt, dendrimer oder cyclisch sein und können auch polymere organische Gruppen, wie Polyether-Polyester- oder Polyharnstoffgruppen enthalten.

Vorzugsweise werden als Organosiliciumverbindungen (2) Organopolysiloxane aus Einheiten der allgemeinen Formel

AₐR_{c}(OR⁴)_{d}SiO_{4-(a+c+d)} (III)

wobei
- A: einen Rest der allgemeinen Formel -R¹-NR²₂ (II) bedeutet, wobei R¹ und R² die oben dafür angegebene Bedeutung haben,
- R: einen einwertigen, gegebenenfalls substituierten Kohlenwasserstoffrest mit 1 bis 18 Kohlenstoffatomen je Rest bedeutet,
- R⁴: ein Wasserstoffatom oder einen Alkylrest mit 1 bis 8 Kohlenstoffatomen, bevorzugt ein Wasserstoffatom oder einen Methyl- oder Ethylrest bedeutet,
- a: 0 oder 1,
- c: 0, 1, 2 oder 3 und
- d: 0 oder 1 ist,
mit der Maßgabe, dass die Summe a+c+d≤3 ist und durchschnittlich mindestens ein Rest A je Molekül enthalten ist,
eingesetzt.

Bevorzugte Beispiele für Organosiliciumverbindungen (2) sind Organopolysiloxane der allgemeinen Formel

AgR_{3-g}SiO (SiR₂O)₁(SiRAO)ₖSiR_{3-g}A_{g} (IVa)

und

(R⁴O)R₂SiO(SiR₂O)ₙ(SiRAO)ₘSiR₂(OR⁴) (IVb)

wobei A, R und R⁴ die oben dafür angegebene Bedeutung haben,
g 0 oder 1,
k 0 oder eine ganze Zahl von 1 bis 30 ist und
l 0 oder eine ganze Zahl von 1 bis 1000 ist,
m eine ganze Zahl von 1 bis 30 ist und
n 0 oder eine ganze Zahl von 1 bis 1000 ist,
mit der Maßgabe, dass durchschnittlich mindestens ein Rest A je Molekül enthalten ist.

Weitere Beispiele für Organosiliciumverbindungen (2) sind Organopolysiloxane aus Einheiten der allgemeinen Formel

ASiO_{3/2} (Va)

und

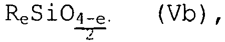

Organopolysiloxane aus Einheiten der allgemeinen Formel

AR₂SiO_{1/2} (Vc)

und 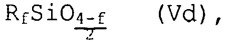 und Organopolysiloxane aus Einheiten der allgemeinen Formel

ARSiO (Ve)

und

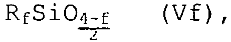

R₂SiO (Vg),

wobei A und R die oben dafür angegebene Bedeutung haben,
e 1, 2 oder 3 und
f 0 oder 1 ist.

Die bei dem erfindungsgemäßen Verfahren eingesetzten Organosiliciumverbindungen (2) weisen vorzugsweise eine Viskosität von 1 mPa.s bis 1 000 000 mPa.s bei 25°C, bevorzugt 100 mPa.s bis 50 000 mPa.s bei 25°C auf.

Beispiele für Reste R sind sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl-und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste R¹ sind
-CH₂CH₂-, -CH(CH₃)-, -CH₂CH₂CH₂-, -CH₂C(CH₃)H-, -CH₂CH₂CH₂CH₂-, -CH₂CH₂CH(CH₃)-, wobei der -CH₂CH₂CH₂-Rest bevorzugt ist.

Beispiele für Kohlenwasserstoffreste R gelten auch für Kohlenwasserstoffreste R².

Weitere Beispiele für R² sind Wasserstoff und N-haltige Reste, wie
-CH₂CH₂NH₂, -CH₂CH₂NHCH₃, -CH₂CH₂N(CH₃)₂, -CH₂CH₂CH₂NH₂, -CH₂CH₂CH₂N (CH₃)₂.

Beispiele für Kohlenwasserstoffreste R gelten auch für Kohlenwasserstoffreste R³.

Beispiele für Alkylreste R⁴ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Bevorzugt als Rest A ist der Rest der allgemeinen Formel

-R¹-NH- (CH₂)₂-NH₂ (VIa),

wobei R¹ die oben dafür angegebene Bedeutung hat,
besonders bevorzugt als Rest A ist der Rest der Formel

-(CH₂)₃-NH- (CH₂)₂-NH₂ (VIb).

Als organische Verbindungen (3) werden vorzugsweise solche eingesetzt, die mit Aminen mehr oder weniger feste Addukte ergeben. Es kann eine Art von Verbindung (3) oder mehrere Arten von Verbindungen (3) eingesetzt werden. Beispiele für Verbindungen (3) sind Aldehyde und Ketone. Bevorzugte Beispiele sind Aceton, Butanon, Methylisobutylketon und Cyclohexanon.

Bei dem erfindungsgemäßen Verfahren wird vorzugsweise die Organosiliciumverbindung (2) zuerst mit der organischen Verbindung (3) gemischt und dann das Diketen (1) zugegeben.

Bei dem erfindungsgemäßen Verfahren werden bevorzugt in einer 1. Stufe Organosiliciumverbindungen (2) mit organischen Verbindungen (3) umgesetzt, wobei die Verbindungen (3) Schutzgruppen an den Aminogruppen im Rest A der Formel (II) bilden, und anschließend in einer 2. Stufe werden die in der 1. Stufe erhaltenen Organosiliciumverbindungen (2) mit den geschützten Aminogruppen (Umsetzungsprodukte aus (2) und (3)) mit Diketenen (1) umgesetzt.
Bei der Umsetzung mit Diketen spaltet sich die Schutzgruppe überraschenderweise wieder von der Aminogruppe im Rest A der Formel (II) ab.

Werden als Verbindungen (3) Ketone eingesetzt, reagieren diese bevorzugt mit den primären Aminogruppen. Diese Reaktion wird bevorzugt bei 0 bis 90°C, besonders bevorzugt bei 10 bis 60°C ausgeführt.
Die Kondensationsreaktion in der 1. Stufe führt zu einem Gleichgewichtszustand, der weit auf der Seite der Umsetzungsprodukte aus (2) und (3) liegt, so dass nur noch sehr wenige primäre Aminogruppen vorhanden sind.
In der 1. Stufe wird als Kondensationsprodukt neben dem Umsetzungsprodukt aus (2) und (3) auch Wasser gebildet, welches zur Regeneration freier Aminogruppen nach Zudosierung von Diketen wieder benötigt wird. Es wurde gefunden, dass die wenigen im Gleichgewicht vorhandene Aminogruppen mit Diketen zu ß-Ketoamiden reagieren, worauf sich erneut ein Gleichgewicht einstellt und dadurch laufend geringe Mengen freie Aminogruppen nachgebildet werden. Nebenreaktionen werden durch diese geringen Aminkonzentrationen überraschenderweise fast vollständig vermieden.

Das Kondensationswasser kann im Gemisch belassen werden, reversibel gebunden oder entfernt werden. Wird Wasser reversibel gebunden, muss es nach Dosierung von Diketen (1) durch geeignete Maßnahmen wieder freigesetzt werden. Bei physikalischer Absorption kann dies meist durch Erwärmen bewirkt werden. Wird Wasser aber aus dem Reaktionsgemisch entfernt, muss es nach Dosierung von Diketen in mindestens gleicher Menge wieder zugesetzt werden, damit der Umsatz von Diketen mit den Aminogruppen vollständig ablaufen kann.

Das Kondensationswasser kann reversibel an Absorbentien gebunden werden, die Wasser aufnehmen können. Beispiele dafür sind Zeolithe wie so genanntes Molekularsieb mit Porengrößen von 3 oder auch 4 Å. Außerdem kann Kondensationswasser auch als "Kristallwasser" in wasserfrei eingesetzten anorganischen Salzen wie Natriumsulfat oder Magnesiumsulfat gebunden werden. Reversibel gebundenes Wasser kann durch Erwärmen der Reaktionsmischung auf geeignete Temperatur wieder freigesetzt und damit für die Regenerierung freier primärer oder sekundärer Aminogruppen wieder verfügbar gemacht werden.

Kondensationswasser kann aus dem Reaktionsgemisch vollständig entfernt werden, wenn die Absorbentien z.B. durch Filtration entfernt werden, oder diese Wasser dermaßen stark binden, dass es durch reaktionsverträgliche Methoden nicht mehr freigesetzt werden kann. Bleibende Entfernung von Wasser kann auch durch Vakuum bewirkt werden. In all diesen Fällen ist nach Diketenzugabe auch erneute Zugabe von Wasser erforderlich. Die Dosierung kann schnell, langsam oder auch portionsweise erfolgen.

Die bei dem erfindungsgemäßen Verfahren eingesetzten organischen Verbindungen (3) können im Produkt verbleiben oder auch entfernt werden, beispielsweise durch Destillation unter Vakuum oder durch Extraktion.

Die organische Verbindung (3) wird in Mengen von vorzugsweise mindestens 1 Mol, bevorzugt mindestens 1,5 Mol, insbesondere 1 bis 10 Mol, besonders bevorzugt 1,5 bis 5 Mol, je Mol Aminogruppe (primäre und sekundäre) im Rest A der allgemeinen Formel (II) in der Organosiliciumverbindung (2) eingesetzt.

Bei dem erfindungsgemäßen Verfahren wird Diketen (1) in Mengen von vorzugsweise 0,5 bis 1,5 Mol, bevorzugt 0,7 bis 1,2 Mol besonders bevorzugt 0,9 bis 1,1 Mol, je Mol Aminogruppe (primäre und sekundäre) im Rest A der allgemeinen Formel (II) in der Organosiliciumverbindung (2) eingesetzt.
Eine besondere Ausführung der Erfindung ist der gleichmolare Einsatz von Diketen und Aminogruppen.

Das erfindungsgemäße Verfahren wird vorzugsweise bei Temperaturen von -20 bis 120°C, bevorzugt 0 bis 90°C, durchgeführt. Besonders bevorzugt ist der Temperaturbereich von 10 bis 60°C. Weiterhin wird das erfindungsgemäße Verfahren vorzugsweise beim Druck der umgebenden Atmosphäre durchgeführt, kann aber auch bei höheren und niedrigeren Drücken durchgeführt werden.

Die nach dem erfindungsgemäßen Verfahren erhaltenen β-Ketocarbonyl-funktionelle Organosiliciumverbindungen enthalten je Molekül vorzugsweise mindestens einen Si-gebundenen Rest B, der eine Gruppe der allgemeinen Formel

-N(-Z)- (VII)

enthält, wobei
Z einen Rest der Formel -C(=O)-CHR³-C(=O)-CH₂R³ bedeutet.

Als β-Ketocarbonyl-funktionelle Organosiliciumverbindungen werden bevorzugt solche erhalten, die als Si-gebundene Reste B je Molekül mindestens einen Rest der allgemeinen Formel

-R¹-NH(-Z) (VIII)

oder

-R¹-NH₁₋ₓ (-Z)ₓ- (CH₂)₂-NH (-Z) (IX)

enthalten, wobei Z die oben dafür angegebene Bedeutung hat und x 0 oder 1 ist,
wobei der Rest der Formel (IX) besonders bevorzugt ist.

Besonders bevorzugt als Rest B ist der Rest der Formel

-(CH₂)₃NH₁₋ₓ(-Z)ₓ-(CH₂)₂-NH (-Z) (X),

wobei Z die oben dafür angegebene Bedeutung hat.

Gegenstand der Erfindung sind daher β-Ketocarbonyl-funktionelle Organosiliciumverbindungen, die je Molekül mindestens einen Si-gebundenen Rest der allgemeinen Formel

-R¹-NH₁₋ₓ(-Z)ₓ-CH₂CH₂-NH (-Z) (IX)

enthalten, wobei Z die oben dafür angegebene Bedeutung hat und x 0 oder 1 ist.

Vorzugsweise werden als β-Ketocarbonyl-funktionelle Organosiliciumverbindungen Organopolysiloxane aus Einheiten der allgemeinen Formel 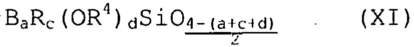 wobei B, R, R⁴, a, c und d die oben dafür angegebene Bedeutung haben,
mit der Maßgabe, dass die Summe aus a+c+d≤3 ist und durchschnittlich mindestens ein Rest B je Molekül enthalten ist,
erhalten.

Bevorzugt Beispiele für β-Ketocarbonyl-funktionelle Organosiliciumverbindungen sind Organopolysiloxane der allgemeinen Formel

B_{g}R_{3-g}SiO(SiR₂O)₁(SiRBO)ₖSiR_{3-g}B_{g} (XIIa)

und

(R⁴O)R₂SiO(SiR₂O)ₙ(SiR₂O)ₘSiRB₂(OR⁴) (XIIb)

wobei B, R und R⁴ die oben dafür angegebene Bedeutung haben,
g 0 oder 1,
k 0 oder eine ganze Zahl von 1 bis 30 ist und
1 0 oder eine ganze Zahl von 1 bis 1000 ist,
m eine ganze Zahl von 1 bis 30 ist und
n 0 oder eine ganze Zahl von 1 bis 1000 ist,
mit der Maßgabe, dass durchschnittlich mindestens ein Rest B je Molekül enthalten ist.

Weitere Beispiele für β-Ketocarbonyl-funktionelle Organosiliciumverbindungen sind Organopolysiloxane aus Einheiten der allgemeinen Formel

BSiO_{3/2} (XIIIa)

und

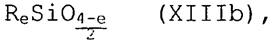

Organopolysiloxane aus Einheiten der allgemeinen Formel

BR₂SiO_{1/2} (XIVa)

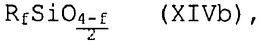

und Organopolysiloxane aus Einheiten der allgemeinen Formel

BRSiO (XVa)

und

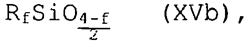

R₂SiO (XVc),

wobei B, R, e und f die oben dafür angegebene Bedeutung haben.

Die bei dem erfindungsgemäßen Verfahren erhaltenen β-Ketocarbonyl-funktionellen Organosiliciumverbindungen weisen vorzugsweise eine Viskosität von 10 mPa.s bis 10 000 000 mPa.s bei 25°C, bevorzugt 100 mPa.s bis 500 000 mPa.s bei 25°C auf.

Die erfindungsgemäßen β-Ketocarbonyl-funktionellen Organosiliciumverbindungen können verwendet werden:
a) zur Fixierung von Siliciumverbindungen / Siloxanen auf amingruppenhaltigen Oberflächen, die aufgrund der pH-Abhängigkeit steuerbar ist
b) zum Polymeraufbau (linear, verzweigt) mittels amingruppenhaltigen Reaktionspartnern bis hin zur Vernetzung, wobei sie je nach Funktionsdichte als Vernetzer oder als zu vernetzende Polymere fungieren
c) zur Fixierung auf metallionenhaltigen Substraten, wobei sich die Metallionen unter Chelatbildung an die erfindungsgemäßen Produkte binden, wobei die Bindungsstärke vom Ionentyp abhängt,
d) zur Vernetzung mit Polyacrylaten durch Michaeladdition

### Beispiel 1 :

Bei 22°C werden 269g eines Dimethylpolysiloxans mit 3-(Aminoethylamino)-propylendgruppen und einem Amingehalt von 0,78 mEqu./g mit 24,4g Aceton gemischt. Nach ca. 4 Stunden dosiert man insgesamt 17,7g Diketen gleichmäßig und unter gutem Rühren in ca. 1 Minute zu. Bei leicht exothermer Reaktion steigt die Viskosität des Aminöls deutlich an. Ohne externe Heizung lässt man noch weitere 2 Stunden nachreagieren und entfernt das zugesetzte Aceton im Vakuum bei 70°C. Man erhält ein klares, gelbliches Öl mit der Viskosität 1800 mm²/s (25°C). Das ¹H-NMR-Spektrum zeigt ein Keto/Enolverhältnis des gebildeten ß-Ketoamidosiloxans von 5,0; der Aminumsatz ist vollständig (> 99%).

### Beispiel 2:

136,5g eines handelsüblichen Aminosiloxans aus 3-(Aminoethylamino)-propyl-methylsiloxy- und Dimethylsiloxyeinheiten und Methoxyendgruppen, sowie einem Amingehalt von 0,293 mEqu./g bei einer Viskosität von 980 mm²/s, werden mit 4,7g Aceton 4 Stunden bei 25°C gerührt. Danach erfolgt Zugabe von 3,7g Diketen, worauf eine leichte Temperaturerhöhung einsetzt. Nach weiteren 2 Stunden wird das Aceton bei 70°C im Vakuum entfernt. Man erhält ein klares, gelbliches Öl mit einer Viskosität von 4900 mm²/s (25°C). Im ¹H-NMR-Spektrum ist ein vollständiger Aminumsatz erkennbar. Das ß-Ketoamidosiloxan hat ein Keto/Enolverhältnis von 3,0. Die prim. wie auch die sec. Aminogruppen wurden acetoacyliert.

### Vergleichsversuch nach US 6,121,404 :

Beispiel 2 wird ohne Zusatz von Aceton, also ohne Verbindung (3) durchgeführt, die auf Aminogruppen konditionierend wirkt. Der Zusatz von Diketen führt ebenso zu exothermer Reaktion, wobei aber die Viskositätszunahme wesentlich kräftiger erfolgt. Nach ca. 5 Minuten wird der Ansatz inhomogen. Man erhält ein teilvergeltes Produkt, welches nur noch teilweise in Toluol löslich ist. Eine Viskosität ist nicht mehr messbar.

### Beispiel 3:

Zur Prüfung der Beherrschbarkeit der Aminölderivatisierung mit Diketen wird ein wesentlich höher viskoses Aminopolysiloxan eingesetzt. So werden 174,8g eines handelsüblichen Aminopolysiloxans mit Strukturelementen identisch denen des Edukts aus Beispiel 2, aber mit einer Viskosität von 5200 mm²/s (25°C) und einem Amingehalt von 0,143 mEqu./g, mit 2,9g Aceton 4 Stunden bei 25°C gerührt. Die anschließende Zugabe von 2,3g Diketen lässt die Viskosität bei schwach exothermer Reaktion ansteigen. Nach 2 Stunden und Entfernung des Acetons bei 70°C im Vakuum erhält man ein klares gelbliches Öl mit einer Viskosität von 16000 mm²/s (25°C). Im ¹H-NMR-Spektrum ist kein restliches Amin mehr erkennbar; das Keto/Enolverhältnis beträgt 3,7. Prim. wie auch sec. Aminogruppen wurden acetoacyliert.

## Patentansprüche

1. Verfahren zur Herstellung von β-Ketocarbonyl-funktionellen Organosiliciumverbindungen, bei dem Diketene (1) der allgemeinen Formel 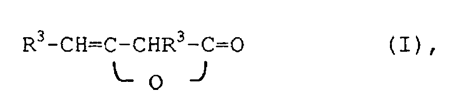 wobei
R³ ein Wasserstoffatom oder einen Kohlenwasserstoffrest mit 1 bis 18 Kohlenstoffatomen bedeutet,
mit Organosiliciumverbindungen (2), die mindestens einen Si-gebundenen Rest A der allgemeinen Formel
-R¹-NR²₂ (II)
je Molekül enthalten, wobei
R¹ einen zweiwertigen organischen Rest mit 2 bis 10 Kohlenstoffatomen, der Heteroatome ausgewählt aus der Gruppe von Sauerstoff, Schwefel und Stickstoff enthalten kann, bedeutet,
R² ein Wasserstoffatom oder einen organischen Rest mit 1 bis 100 Kohlenstoffatomen, der Stickstoffatome enthalten kann, bedeutet,
mit der Maßgabe, dass der Rest A der Formel (II) mindestens eine primäre und gegebenenfalls mindestens eine sekundäre Aminogruppe aufweist,
in Gegenwart von organischen Verbindungen (3), die die Reaktion von primären oder sekundären Aminogruppen mit β-Ketocarbonylverbindungen verzögern oder verhindern,
umgesetzt werden.

2. Verfahren nach Anspruch 1, **dadurch gekennzeichnet, dass** in einer 1. Stufe
Organosiliciumverbindungen (2) gemäß Anspruch 1 mit organischen Verbindungen (3) gemäß Anspruch 1, umgesetzt werden,
und in einer 2. Stufe
Diketene (1) gemäß Anspruch 1 zu den in der 1. Stufe erhaltenen Umsetzungsprodukten aus (2) und (3) zugegeben werden.

3. Verfahren nach Anspruch 2, **dadurch gekennzeichnet, dass** das in der 1. Stufe bei der Kondensation freiwerdende Wasser reversibel gebunden wird und nach Zugabe von Diketen (1) wieder freigesetzt wird.

4. Verfahren nach Anspruch 2, **dadurch gekennzeichnet, dass** das in der 1. Stufe bei der Kondensation freiwerdende Wasser aus dem Reaktionsgemisch entfernt wird und nach Zugabe von Diketen (1) wieder zugegeben wird.

5. Verfahren nach einem der Ansprüche 1 bis 4, **dadurch gekennzeichnet, dass** als organische Verbindungen (3) Aldehyde oder Ketone eingesetzt werden.

6. Verfahren nach einem der Ansprüche 1 bis 5, **dadurch gekennzeichnet, dass** als organische Verbindungen (3) solche ausgewählt aus der Gruppe von Aceton, Butanon, Methylisobutylketon und Cyclohexanon eingesetzt werden.

7. Verfahren nach einem der Ansprüche 1 bis 6, **dadurch gekennzeichnet, dass** die organische Verbindung (3) in Mengen von mindestens 1 Mol je Mol Aminogruppe (primäre und sekundäre) im Rest A der allgemeinen Formel (II) in der Organosiliciumverbindung (2) eingesetzt wird.

8. Verfahren nach einem der Ansprüche 1 bis 6, **dadurch gekennzeichnet, dass** die organische Verbindung (3) in Mengen von mindestens 1,5 Mol je Mol Aminogruppe (primäre und sekundäre) im Rest A der allgemeinen Formel (II) in der Organosiliciumverbindung (2) eingesetzt wird.

9. Verfahren nach einem der Ansprüche 1 bis 8, **dadurch gekennzeichnet, dass** Diketen (1) in Mengen von 0,7 bis 1,2 Mol je Mol Aminogruppe (primäre und sekundäre) im Rest A der allgemeinen Formel (II) in der Organosiliciumverbindung (2) eingesetzt wird.

10. Verfahren nach einem der Ansprüche 1 bis 8, **dadurch gekennzeichnet, dass** Diketen (1) in Mengen von 0,9 bis 1,1 Mol je Mol Aminogruppe (primäre und sekundäre) im Rest A der allgemeinen Formel (II) in der Organosiliciumverbindung (2) eingesetzt wird.

11. Verfahren nach einem der Ansprüche 1 bis 10, **dadurch gekennzeichnet, dass** das Verfahren bei einer Temperatur von -20°C bis 120°C durchgeführt wird.

12. Verfahren nach einem der Ansprüche 1 bis 11, **dadurch gekennzeichnet, dass** R³ ein Wasserstoffatom ist.

13. Verfahren nach einem der Ansprüche 1 bis 12, **dadurch gekennzeichnet, dass** R¹ einen zweiwertigen Kohlenwasserstoffrest mit 2 bis 10 Kohlenstoffatomen bedeutet.

14. Verfahren nach einem der Ansprüche 1 bis 13, **dadurch gekennzeichnet, dass** R² ein Wasserstoffatom oder einen Alkyl-, Cycloalkyl- oder Aminoalkylrest bedeutet.

15. Verfahren nach einem der Ansprüche 1 bis 14, **dadurch gekennzeichnet, dass** der Rest A ein Rest der Formel
-R¹-NH-(CH₂)₂-NH₂ (VIa)
ist, wobei R¹ die in Anspruch 1 dafür angegebene Bedeutung hat.

## Claims

1. Process for preparing β-ketocarbonyl-functional organosilicon compounds, in which diketenes (1) of the general formula 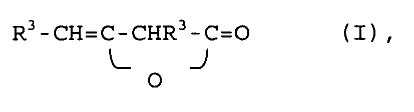 where
R³ is a hydrogen atom or a hydrocarbon radical having from 1 to 18 carbon atoms,
are reacted with organosilicon compounds (2) which contain at least one Si-bonded radical A of the general formula
-R¹-NR²₂ (II)
per molecule, where
R¹ is a divalent organic radical which has from 2 to 10 carbon atoms and may contain heteroatoms selected from the group consisting of oxygen, sulfur and nitrogen,
R² is a hydrogen atom or an organic radical which has from 1 to 100 carbon atoms and may contain nitrogen atoms,
with the proviso that the radical A of the formula (II) has at least one primary amino group and, if appropriate, at least one secondary amino group,
in the presence of organic compounds (3) which retard or prevent the reaction of primary or secondary amino groups with β-ketocarbonyl compounds.

2. Process according to Claim 1, **characterized in that**
organosilicon compounds (2) according to Claim 1 are reacted with organic compounds (3) according to Claim 1 in a 1^{st} stage,
and
diketenes (1) according to Claim 1 are added to the reaction products of (2) and (3) obtained in the 1^{st} stage in a 2^{nd} stage.

3. Process according to Claim 2, **characterized in that** the water liberated in the condensation in the 1^{st} stage is bound reversibly and set free again after addition of diketene (1).

4. Process according to Claim 2, **characterized in that** the water liberated in the condensation in the 1^{st} stage is removed from the reaction mixture and is added again after addition of diketene (1).

5. Process according to any of Claims 1 to 4, **characterized in that** aldehydes or ketones are used as organic compounds (3).

6. Process according to any of Claims 1 to 5, **characterized in that** compounds selected from the group consisting of acetone, butanone, methyl isobutyl ketone and cyclohexanone are used as organic compounds (3).

7. Process according to any of Claims 1 to 6, **characterized in that** the organic compound (3) is used in amounts of at least 1 mol per mole of amino group (primary and secondary) in the radical A of the general formula (II) in the organosilicon compound (2).

8. Process according to any of Claims 1 to 6, **characterized in that** the organic compound (3) is used in amounts of at least 1.5 mol per mole of amino group (primary and secondary) in the radical A of the general formula (II) in the organosilicon compound (2).

9. Process according to any of Claims 1 to 8, **characterized in that** diketene (1) is used in amounts of from 0.7 to 1.2 mol per mole of amino group (primary and secondary) in the radical A of the general formula (II) in the organosilicon compound (2).

10. Process according to any of Claims 1 to 8, **characterized in that** diketene (1) is used in amounts of from 0.9 to 1.1 mol per mole of amino group (primary and secondary) in the radical A of the general formula (II) in the organosilicon compound (2).

11. Process according to any of Claims 1 to 10, **characterized in that** the process is carried out at a temperature of from -20°C to 120°C.

12. Process according to any of Claims 1 to 11, **characterized in that** R³ is a hydrogen atom.

13. Process according to any of Claims 1 to 12, **characterized in that** R¹ is a divalent hydrocarbon radical having from 2 to 10 carbon atoms.

14. Process according to any of Claims 1 to 13, **characterized in that** R² is a hydrogen atom or an alkyl, cycloalkyl or aminoalkyl radical.

15. Process according to any of Claims 1 to 14, **characterized in that** the radical A is a radical of the formula
-R¹-NH-(CH₂)₂-NH₂ (VIa)
where R¹ is as defined in Claim 1.

## Revendications

1. Procédé de fabrication de composés d'organosilicium à fonction β-cétocarbonyle, selon lequel des dicétènes (1) de formule générale 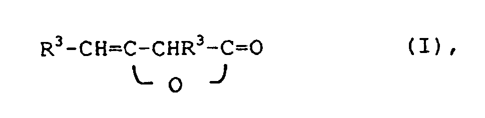 dans laquelle
R³ signifie un atome d'hydrogène ou un radical hydrocarboné de 1 à 18 atomes de carbone,
sont mis en réaction avec des composés d'organosilicium (2), qui contiennent au moins un radical A relié à Si de formule générale
-R¹-NR²₂ (II)
par molécule,
R¹ signifiant un radical organique bivalent de 2 à 10 atomes de carbone, qui peut contenir des hétéroatomes choisis dans le groupe constitué par l'oxygène, le soufre et l'azote,
R² signifiant un atome d'hydrogène ou un radical organique de 1 à 100 atomes de carbone, qui peut contenir des atomes d'azote,
à condition que le radical A de formule (II) comprenne au moins un groupe amino primaire et éventuellement au moins un groupe amino secondaire,
en présence de composés organiques (3), qui ralentissent ou empêchent la réaction de groupes amino primaires ou secondaires avec des composés de β-cétocarbonyle.

2. Procédé selon la revendication 1, **caractérisé en ce que**, lors d'une étape 1,
des composés d'organosilicium (2) selon la revendication 1 sont mis en réaction avec des composés organiques (3) selon la revendication 1,
et lors d'une étape 2,
des dicétènes (1) selon la revendication 1 sont ajoutés aux produits de réaction de (2) et (3) obtenus à l'étape 1.

3. Procédé selon la revendication 2, **caractérisé en ce que** l'eau libérée lors de la condensation à l'étape 1 est fixée de manière réversible et de nouveau libérée après l'ajout du dicétène (1).

4. Procédé selon la revendication 2, **caractérisé en ce que** l'eau libérée lors de la condensation à l'étape 1 est éliminée du mélange réactionnel et de nouveau ajoutée après l'ajout du dicétène (1).

5. Procédé selon l'une quelconque des revendications 1 à 4, **caractérisé en ce que** des aldéhydes ou des cétones sont utilisés en tant que composés organiques (3).

6. Procédé selon l'une quelconque des revendications 1 à 5, **caractérisé en ce que** des composés choisis dans le groupe constitué par l'acétone, la butanone, la méthylisobutylcétone et la cyclohexanone sont utilisés en tant que composés organiques (3).

7. Procédé selon l'une quelconque des revendications 1 à 6, **caractérisé en ce que** le composé organique (3) est utilisé en quantités d'au moins 1 mol par mol de groupe amino (primaire et secondaire) dans le radical A de formule générale (II) dans le composé d'organosilicium (2).

8. Procédé selon l'une quelconque des revendications 1 à 6, **caractérisé en ce que** le composé organique (3) est utilisé en quantités d'au moins 1,5 mol par mol de groupe amino (primaire et secondaire) dans le radical A de formule générale (II) dans le composé d'organosilicium (2).

9. Procédé selon l'une quelconque des revendications 1 à 8, **caractérisé en ce que** le dicétène (1) est utilisé en quantités de 0,7 à 1,2 mol par mol de groupe amino (primaire et secondaire) dans le radical A de formule générale (II) dans le composé d'organosilicium (2).

10. Procédé selon l'une quelconque des revendications 1 à 8, **caractérisé en ce que** le dicétène (1) est utilisé en quantités de 0,9 à 1,1 mol par mol de groupe amino (primaire et secondaire) dans le radical A de formule générale (II) dans le composé d'organosilicium (2).

11. Procédé selon l'une quelconque des revendications 1 à 10, **caractérisé en ce que** le procédé est réalisé à une température de -20 °C à 120 °C.

12. Procédé selon l'une quelconque des revendications 1 à 11, **caractérisé en ce que** R³ est un atome d'hydrogène.

13. Procédé selon l'une quelconque des revendications 1 à 12, **caractérisé en ce que** R¹ signifie un radical hydrocarboné bivalent de 2 à 10 atomes de carbone.

14. Procédé selon l'une quelconque des revendications 1 à 13, **caractérisé en ce que** R² signifie un atome d'hydrogène ou un radical alkyle, cycloalkyle ou aminoalkyle.

15. Procédé selon l'une quelconque des revendications 1 à 14, **caractérisé en ce que** le radical A est un radical de formule
-R¹-NH- (CH₂)₂-NH₂ (VIa)
dans laquelle R¹ a la signification donnée dans la revendication 1.
